# EUROPEAN PATENT SPECIFICATION

(11) **EP 1 117 744 B1**
(45) Date of publication and mention of the grant of the patent: **16.11.2005**
(21) Application number: 99968243.8
(22) Date of filing: 01.09.1999
(51) Int. Cl.: C09G 1/08, C09G 1/18

(54) **COMPOSITION FOR ABRADABLE AND/OR SCRATCHABLE SURFACES**
ZUSAMMENSETZUNG FÜR ABSCHLEIFBARE UND/ODER VERKRATZBARE OBERFLÄCHEN
COMPOSITION POUR SURFACES SUSCEPTIBLES D'ETRE ABRASEES ET/OU RAYEES

(30) Priority: 01.09.1998 GB 9819041
(43) Date of publication of application: 25.07.2001
(73) Proprietor: Holt Lloyd Limited, Wilmslow Cheshire SK 9 1QT (GB)
(72) Inventor: HYWEAL-EVANS, Duncan, Cornwall TR7 2SSX (GB)
(74) Representative: Hucker, Charlotte Jane
(86) International application number: PCT/IB1999/001611
(87) International publication number: WO 2000/012641

(56) References cited:
- BE-A- 510 960
- DE-A- 4 407 442
- GB-A- 925 405

## Description

The invention relates to the treatment of surfaces which can be abraded or scratched in such a way that the appearance will be marred. More particularly the invention provides a method of making the composition; and a method of applying the composition so as to obscure the abrasion or scratch marks.

A substrate having a surface layer of paint, lacquer, gel or like material is continually subjected to abrasion or scratching. Our investigations have shown that scratches made by irregular objects are not just straight lines but can be parallel lines. Such scratches can refract light to produce interference patterns.

BE-A-510960 discloses a polish composition containing carnauba wax dissolved in white spirit. GB-A-925405 discloses a polish composition containing carnauba wax and another wax. DE-1234567 discloses an aqueous emulsion of a hydrocarbon solvent and a wax.

We have now discovered that it is possible to formulate a polish composition to obscure abrasion or such scratch marks and thereby provide a high gloss finish and other advantages. Generally the polish composition is applied to modify the light path incident on scratches which cause light interference patterns whereby the layer presents a high gloss appearance.

According to the invention in one aspect there is provided a method of polishing a layer of abradable or scratchable material present on a substrate, by applying a coating of a polish thereto, the polish composition comprising a non-volatile component selected to have a refractive index which matches that of the layer and a volatile carrier innocuous to the layer.

The non-volatile component preferably comprises one or more natural or synthetic waxes or oils. In one preferred aspect the non-volatile component comprises a wax having a refractive index substantially that of the layer, blended with a second wax selected so that the refractive index of the non-volatile component matches that of the layer. Typically the second wax will have a higher refractive index than the first but of course it may be lower, depending on the circumstances.

In one preferred aspect the wax comprises a carnauba wax blended with another wax. The refractive index of the non-volatile component may be measured in any known way. Where the component is a solid this may need to be dissolved first to determine the refractive index.

The non-volatile component need not be a wax. For example it may be an oil such as a hydrocarbon oil or a siloxane such as polydimethylsiloxane. Mixtures of oils or waxes or both may be used.

Preferably the composition includes a stabiliser selected to avoid wetting the non-volatile component in use. Preferably the stabiliser is a fluorocarbon telomer, specifically a fluorotelomer/hydrocarbon hybrid. Preferably this ingredient is present in a low proportion. The content of stabiliser is preferably about 0.1 to about 0.5 by weight; more preferably the content of stabiliser is about 0.2% by weight. The telomer acts as a stabiliser or lubricant for the other ingredients and as a surface energy modifier for the wax coating. The stabiliser may also be a low volatile solvent, such as a siloxane.

The volatile component can be a low aromatic white spirit.

The composition may include water. The water acts as a lubricant and the cleaner, and as a modifier of the rate of evaporation. The composition may also include optional ingredients such as fillers and/or abrasives.

In another aspect the invention provides a method of making a composition for application to a layer of abradable or scratchable material, comprising determining the refractive index of the material and formulating a composition comprising a non-volatile component having a refractive index substantially the same as that of the material and a volatile carrier innocuous to the material. Preferably the method comprises mixing a wax and/or oil, the white spirit, stabiliser and volatile component while heating, and then adding water, and mixing to a cream like consistency.

The composition may be applied to any surface which can be or has been scratched or abraded. The surface layer may be paint which is metallic or pearlescent, or lacquer or a gel coating. Typically the substrate will be metal, but it may be fibreglass or a composite. The substrate may be a vehicle, such as a car or boat, yacht, surfboard or a garage door.

In order that the invention may be well understood it will now be described by way of illustration only with reference to the following examples, in which parts are by weight.

### Example 1

A base composition was made of:

| | |
|---|---|
| low aromatic white spirit | 40.0 |
| prime yellow no 1 carnauba wax (refractive index 1.472) | 2.8 |
| Dupont fluorotelomer/hydrocarbon hybrid (telomer) | 0.207 |
| Water | 56.993 |

It is believed that the telomer is the subject of US patent 5310870 published on May 10, 1994.

The first three ingredients are heated until they dissolve, added to a mixer and the water added and the mixer operated until a cream like consistency was achieved. The refractive index of the composition was determined. The refractive index of the scratched surface, eg. a vehicle surface was determined. Another wax such as a wax available from Kahl Wax Refinery was then blended in, the Kahl wax being selected by its refractive index and quantity so that the polish composition had a refractive index which matched that of the car surface, say 1.473. The composition was applied to the scratched car surface, and then mechanically buffed in. It was found that the water evaporated, leaving the non-volatile composition behind. The hybrid aided in the buffing, and remained after buffing to reduce the surface energy of the polish, substantially increasing the durability of the polish.

The applied coating was compared with a carnauba based wax polish. It was found that the polish composition of the invention greatly reduced hologramming compared to the test panel. Examination showed that the coating of the invention modified the path and direction of the incident light to maintain parallel light paths whereby to produce good reflected images. This in turn leads to high gloss readings, as less incident light is lost through specular reflectance.

### Example 2

The following were mixed together in the manner of Example 1 to form a polish:

| | |
|---|---|
| low aromatic white spirit | 40.0 |
| 1° yellow no. 1 carnauba wax (base wax r.i. 1.472) | 2.8 |
| proprietary fluorotelomer/ hydrocarbon hybrid | 0.207 |
| water | 56.993 |

### Example 3

The following were mixed together in the manner of Example 1 to form a polish:

| | |
|---|---|
| low aromatic white spirit | 92.72 |
| Wilkins Campbell Wax 6712 | |
| (base wax r.i. 1.55944) | 6.62 |
| proprietary fluorotelomer/ hydrocarbon hybrid | 0.66 |

The invention is not limited to the examples. The waxes may be blended so as to lower the refractive index of the base wax. Oils may be used and the stabiliser may be a substance other than a fluorocarbon telomer. The surface may be new or used.

## Claims

1. A method of polishing a layer of abradable or scratchable material present on a substrate by applying a coating of a polish composition thereto, **characterised in that** the polish composition comprises a volatile carrier innocuous to the layer and a non-volatile component which has a refractive index which matches that of the layer.

2. A method according to claim 1, wherein the non-volatile component comprises one or more natural or synthetic waxes or oils.

3. a method according to claim 2, wherein the non-volatile component comprises two waxes which together have a refractive index which matches that of the layer.

4. A method according to claim 3, wherein the non-volatile component comprises a carnauba wax blended with a wax having a higher refractive index.

5. A method according to any of claims 2 to 4, wherein the non-volatile component comprises a hydrocarbon oil or a siloxane.

6. A method according to any preceding claim, wherein the polish composition includes a stabiliser to avoid wetting of the non-volatile component.

7. A method according to claim 6, wherein the stabiliser is a fluorocarbon telomer.

8. A method according to claim 7, wherein the stabiliser is a fluorotelomer hybrid.

9. A method according to claims 6 or 8, wherein the content of the stabiliser is 0.1 to 0.5% by weight of the composition.

10. A method according to claim 9, wherein the content of stabiliser is 0.2% by weight of the composition.

11. A method according to any preceding claim, wherein the layer to be polished has abrasion or scratch marks which cause light interference patterns and the polish composition is applied to modify the light path incident on the scratches whereby the layer presents a high gloss appearance.

12. A method according to claim 11, wherein the layer is a paint which is metallic or pearlescent.

13. A method according to claim 11, wherein the layer is a gel coating.

14. A method according to claim 11, wherein the layer is a gel coating on fibreglass.

15. A method for the production of a polish composition suitable for application to a layer of abradable or scratchable material present on a substrate comprising determining the refractive index of the layer, and formulating a polish composition comprising a volatile carrier innocuous to the layer and a non-volatile component, **characterised in that** the non-volatile component is selected to have a refractive index which matches that of the layer.

16. A method according to claim 15 in which the polish composition is formulated by mixing wax and/or oil as the non-volatile component, the volatile component and stabiliser selected to avoid wetting the non-volatile component while heating and then adding water and mixing.

17. A method according to claim 15 or claim 16 in which the polish composition additionally has any of the features recited in claims 2 to 10.

## Patentansprüche

1. Verfahren zum Polieren einer Schicht aus abreibbarem oder zerkratzbarem Material auf einem Substrat durch Aufbringen eines Überzugs aus einem Poliermittel, **dadurch gekennzeichnet, daß** das Poliermittel einen für die Schicht unschädlichen flüchtigen Träger und eine nichtflüchtige Komponente mit einem an den Brechungsindex der Schicht angepaßten Brechungsindex enthält.

2. Verfahren nach Anspruch 1, bei dem die nichtflüchtige Komponente ein oder mehrere natürliche oder synthetische Wachse oder Öle enthält.

3. Verfahren nach Anspruch 2, bei dem die nichtflüchtige Komponente zwei Wachse, die zusammen einen an den Brechungsindex der Schicht angepaßten Brechungsindex aufweisen, enthält.

4. Verfahren nach Anspruch 3, bei dem die nichtflüchtige Komponente einen Carnaubawachs in Abmischung mit einem Wachs mit höherem Brechungsindex enthält.

5. Verfahren nach einem der Ansprüche 2 bis 4, bei dem die nichtflüchtige Komponente zumindest teilweise aus einem Kohlenwasserstofföl oder einem Siloxan besteht.

6. Verfahren nach einem der vorhergehenden Ansprüche, bei dem das Poliermittel einen Stabilisator zur Vermeidung der Benetzung der nichtflüchtigen Komponente enthält.

7. Verfahren nach Anspruch 6, bei dem es sich bei dem Stabilisator um ein Fluorkohlenwasserstofftelomer handelt.

8. Verfahren nach Anspruch 7, bei dem es sich bei dem Stabilisator um ein Fluortelomerhybrid handelt.

9. Verfahren nach Anspruch 6 oder 8, bei dem der Gehalt an Stabilisator 0,1 bis 0,5 Gew.-%, bezogen auf das Mittel, beträgt.

10. Verfahren nach Anspruch 9, bei dem der Gehalt an Stabilisator 0,2 Gew.-%, bezogen auf das Mittel, beträgt.

11. Verfahren nach einem der vorhergehenden Ansprüche, bei dem die zu polierende Schicht Abrieb- oder Kratzspuren aufweist, welche Lichtinterferenzmuster verursachen, und das Poliermittel zur Modifizierung des auf die Kratzer einfallenden Lichtwegs aufgebracht wird, wodurch die Schicht ein hochglänzendes Aussehen erhält.

12. Verfahren nach Anspruch 11, bei dem es sich bei der Schicht um einen Metallic- oder Perlglanzlack handelt.

13. Verfahren nach Anspruch 11, bei dem es sich bei der Schicht um eine Gelcoatschicht handelt.

14. Verfahren nach Anspruch 11, bei dem es sich bei der Schicht um eine Gelcoatschicht auf Glasfaser handelt.

15. Verfahren zur Herstellung eines Poliermittels zum Aufbringen auf eine Schicht aus abreibbarem oder zerkratzbarem Material auf einem Substrat, bei dem man den Brechungsindex der Schicht bestimmt und ein einen für die Schicht unschädlichen flüchtigen Träger und eine nichtflüchtige Komponente enthaltendes Poliermittel formuliert, **dadurch gekennzeichnet, daß** man die nichtflüchtige Komponente so wählt, daß sie einen an den Brechungsindex der Schicht angepaßten Brechungsindex aufweist.

16. Verfahren nach Anspruch 15, bei dem man das Poliermittel formuliert, indem man Wachs und/oder Öl als nichtflüchtige Komponente, die flüchtige Komponente und zur Vermeidung der Benetzung der nichtflüchtigen Komponente ausgewählten Stabilisator unter Erhitzen formuliert und dann Wasser zugibt und mischt.

17. Verfahren nach Anspruch 15 oder 16, bei dem das Poliermittel zusätzlich eines der Merkmale gemäß den Ansprüchen 2 bis 10 aufweist.

## Revendications

1. Procédé de polissage d'une couche de matériau susceptible d'être abrasé ou rayé présente sur un substrat en y appliquant un revêtement d'une composition de produit à polir, **caractérisé en ce que** la composition de produit à polir comprend un vecteur volatil inoffensif pour la couche et un composant non volatil qui a un indice de réfraction qui correspond à celui de la couche.

2. Procédé selon la revendication 1, dans lequel le composant non volatil comprend une ou plusieurs cires ou huiles naturelles ou synthétiques.

3. Procédé selon la revendication 2, dans lequel le composant non volatil comprend deux cires qui ont ensemble un indice de réfraction qui correspond à celui de la couche.

4. Procédé selon la revendication 3, dans lequel le composant non volatil comprend de la cire de carnauba mélangée à une cire qui a un indice de réfraction plus élevé.

5. Procédé selon l'une quelconque des revendications 2 à 4, dans lequel le composant non volatil comprend une huile d'hydrocarbure ou un siloxane.

6. Procédé selon l'une quelconque des revendications précédentes, dans lequel la composition du produit à polir comprend un stabilisant pour empêcher le mouillage du composant non volatil.

7. Procédé selon la revendication 6, dans lequel le stabilisant est un télomère fluorocarboné.

8. Procédé selon la revendication 7, dans lequel le stabilisant est un hybride de fluorotélomère.

9. Procédé selon l'une quelconque des revendications 6 ou 8, dans lequel la teneur en stabilisant est de 0,1 à 0,5% en poids de la composition.

10. Procédé selon la revendication 9, dans lequel la teneur en stabilisant est de 0,2% en poids de la composition.

11. Procédé selon l'une quelconque des revendications précédentes, dans lequel la couche à polir présente des marques d'abrasion ou de rayure qui causent des figures d'interférence de lumière et la composition du produit à polir est appliquée pour modifier la trajectoire de la lumière incidente sur les rayures, ce par quoi la couche présente une apparence de brillance importante.

12. Procédé selon la revendication 11, dans lequel la couche est une peinture qui est métallique ou perlée.

13. Procédé selon la revendication 11, dans lequel la couche est un enduit gélifié.

14. Procédé selon la revendication 11, dans lequel la couche est un enduit gélifié sur de la fibre de verre.

15. Procédé pour la production d'une composition de produit à polir appropriée pour l'application sur une couche de matériau susceptible d'être abrasé ou rayé présent sur un substrat, comprenant la détermination de l'indice de réfraction de la couche, et la formulation d'une composition de produit à polir comprenant un vecteur volatil inoffensif pour la couche et un composant non volatil, **caractérisé en ce que** le composant non volatil est sélectionné pour avoir un indice de réfraction qui corresponde à celui de la couche.

16. Procédé selon la revendication 15 dans lequel la composition de produit à polir est formulée en mélangeant de la cire et/ou de l'huile en tant que composant non volatil, le composant volatil et le stabilisant choisi pour empêcher le mouillage du composant non volatil pendant le chauffage et ensuite en ajoutant de l'eau et en mélangeant.

17. Procédé selon la revendication 15 ou la revendication 16 dans lequel la composition du produit à polir a en outre l'une quelconque des caractéristiques reprises dans les revendications 2 à 10.
